# DEMANDE DE BREVET EUROPEEN

(11) **EP 4 826 625 A1**
(43) Date de publication de la demande: **21.10.2026**
(21) Numéro de dépôt: 26172371.2
(22) Date de dépôt: 14.04.2026
(51) Int. Cl.: G06Q 10/30, G06Q 10/0635, G06Q 10/0639

(54) **PROCÉDÉ DE GESTION PRÉDICTIVE D'UNE CONTAMINATION D'UN CONTENEUR DE COLLECTE DE DÉCHETS**

(30) Priorité: 14.04.2025 FR 2503973
(71) Demandeur: SULO France, 92700 Colombes (FR)
(72) Inventeur: CAMBE, Didier, 92700 COLOMBES (FR)
(74) Mandataire: LLR

(57) **Abrégé**

Le procédé de gestion prédictive d'une contamination d'un conteneur de collecte de déchets, comprend les étapes dans lesquelles :
- on traite (E1) des informations de tri liées, d'une part, à un ou plusieurs évènements antérieurs de contamination par au moins un contaminant prédéterminé d'un conteneur de collecte de déchets prédéterminé, et, d'autre part, à au moins un paramètre prédéterminé associé à une augmentation d'un risque de contamination du conteneur de collecte de déchets prédéterminé,
- on détermine, sur la base du traitement des informations de tri, un score de tri indicatif d'un risque de contamination du conteneur (2) de collecte de déchets, et
- si le score de tri est supérieur à un seuil prédéterminé, on commande (E3) la mise en œuvre d'une action corrective et/ou préventive destinée à empêcher et/ou prévenir la collecte du conteneur (2) de collecte de déchet prédéterminé contaminé.

## Description

### Domaine technique

L'invention concerne un procédé de gestion prédictive d'anomalie de tri d'un conteneur de collecte de déchets. L'invention concerne également un véhicule de collecte de déchets.

### État de la technique

Le tri des déchets est un enjeu écologique majeur. Au cours de ces dernières années, de nombreux efforts ont été faits pour inciter au tri et donc à la valorisation des déchets. Toutefois, les erreurs de tri sont encore fréquentes et impactent négativement les processus de recyclage et de valorisation des déchets. Des moyens ont été développés pour détecter les erreurs de tri afin notamment d'agir pour réduire l'impact négatif des erreurs de tri sur la valorisation des déchets. En particulier, il est connu d'utiliser des moyens de capture d'image associés à un modèle entrainé par apprentissage automatique, aussi communément appelé intelligence artificielle, afin de détecter dans le conteneur de collecte de déchets d'éventuels contaminants.

Par ailleurs, il est également connu de peser un conteneur de collecte de déchets censés contenir des déchets valorisable afin de détecter un éventuel surpoids suspect, difficilement compatible avec un conteneur contenant uniquement des déchets valorisable. Ainsi, en cas de surpoids, il peut être prévu que le camion de collecte soit configuré pour ne pas collecter le contenu du conteneur de collecte des déchets dans le trémie du camion de collecte afin qu'un opérateur de collecte puisse vérifier manuellement la qualité du tri des déchets. Toutefois, cette manière de procéder génère de nombreux faux positifs, rendant le travail de l'opérateur fastidieux avec notamment une perte de temps importante.

Il est donc souhaitable de fournir un procédé pour améliorer la qualité de tri des conteneurs de collecte de déchets tout en limitant l'impact sur les opérations de collecte.

### Résumé de l'invention

À cet effet, l'invention a pour objet un procédé de gestion prédictive d'une contamination d'un conteneur de collecte de déchets mis en œuvre par ordinateur, dans lequel :
- on traite des informations de tri liées, d'une part, à un ou plusieurs évènements antérieurs de contamination par au moins un contaminant prédéterminé d'un conteneur de collecte de déchets prédéterminé, et, d'autre part, à au moins un paramètre prédéterminé associé à une augmentation d'un risque de contamination du conteneur de collecte de déchets prédéterminé,
- on détermine, sur la base du traitement des informations de tri, un score de tri indicatif d'un risque de contamination du conteneur de collecte de déchets, et
- si le score de tri est supérieur à un seuil prédéterminé, on commande la mise en œuvre d'une action corrective et/ou préventive destinée à empêcher et/ou prévenir la collecte du conteneur de collecte de déchet prédéterminé contaminé.

Le procédé permet ainsi de prédire de manière efficace et fiable un risque de contamination d'un conteneur de collecte de déchets prédéterminé et permet ainsi de limiter le risque de contamination d'une benne de collecte de déchets, voire d'empêcher une telle contamination. L'utilisation des évènements antérieurs de contamination du conteneur de collecte de déchets prédéterminé et d'au moins un autre paramètre prédéterminé associé à une augmentation d'un risque de contamination du conteneur de collecte de déchets prédéterminé permet d'affiner la détermination du risque de contamination du conteneur de collecte de déchets et donc de réduire le nombre de faux positifs, i.e. le nombre de fois où une alerte est émise pour un risque qu'un conteneur de collecte de déchets soit contaminé sans que cela ne soit le cas. Ainsi, les actions correctives et/ou préventives sont mises en œuvre moins souvent, ce qui permet d'optimiser le processus de collecte des déchets, notamment par un gain de temps pour les opérateurs de collecte des déchets. En outre, le procédé permet de prédire des risques de contamination du conteneur de collecte des déchets qui n'auraient pas été identifiés avec des procédés de l'art antérieur, réduisant ainsi le nombre de conteneur de collecte de déchets qui sont collectés alors qu'ils sont contaminés, et réduisant donc par la même occasion une éventuelle contamination de la benne de collecte de déchets d'un véhicule de collecte de déchets.

Par « contaminant prédéterminé » on entend désigner tout déchet qui n'est pas destiné à être déposé dans le conteneur de collecte de déchets prédéterminé. Par exemple, lorsque le conteneur est un conteneur de collecte de déchets valorisables, un contaminant prédéterminé correspondant à tout déchet qui ne serait pas un déchet valorisable, par exemple des graviers, des ordures ménagères, une bouteille ou une cartouche de gaz ou encore un produit en verre. Selon un autre exemple, lorsque le conteneur est un conteneur de collecte de déchets ménagers, un contaminant prédéterminé correspond à tout déchet qui ne serait pas une déchet ménager, par exemple des graviers, un produit en verre, ou des déchets dangereux telles qu'une bouteille ou une cartouche de gaz. Dans le cas de bouteilles ou cartouches de gaz, on comprend qu'en plus de représenter une erreur de tri qui impacte le processus de valorisation ou d'élimination des déchets, ces déchets présentent des problèmes de sécurité puisqu'ils sont susceptibles d'exploser dans le conteneur de collecte de déchets, dans la benne de collecte des déchets d'un véhicule de collecte des déchets ou encore dans un centre de tri des déchets. On peut prévoir que le conteneur de collecte de déchets comprend plusieurs compartiments de collecte de déchets destinés chacun à collecter un type de déchets donné. On comprend qu'un « contaminant prédéterminé » désigne alors, pour un des compartiments de collecte de déchet, un déchet qui n'est pas destiné à être déposé dans ce compartiment. Ainsi, lorsqu'un conteneur de collecte de déchets comprend plusieurs compartiments de collecte de déchets, un déchet donné peut être considéré comme un contaminant pour un des compartiments de collecte de déchets et ne pas être considéré comme un contaminant pour un autre des compartiments de collecte de déchets. Par exemple, on peut prévoir qu'un conteneur de collecte de déchets comprend deux compartiments de collecte de déchets, tels qu'un premier compartiment de collecte de déchets valorisables et un deuxième compartiment de collecte de déchets ménagers. Dans ce cas, un déchet ménager est considéré comme un contaminant lorsqu'il est placé dans le compartiment de collecte de déchets valorisables et n'est pas considéré comme un contaminant lorsqu'il est placé dans le compartiment de collecte de déchets ménagers. Bien entendu, en peut prévoir que certains déchets sont considérés comme des contaminants pour les deux compartiments de collecte de déchets, par exemple lorsque le déchet est un déchet dangereux telles qu'une bouteille ou une cartouche de gaz ou un produit en verre.

Un conteneur de collecte de déchets est dit contaminé lorsqu'il comprend au moins un contaminant défini comme tel par rapport aux déchets que le conteneur de collecte de déchets est destiné à contenir. Dans le cas où un conteneur de collecte de déchets comprend plusieurs compartiments de collecte de déchets, le conteneur de collecte de déchets est dit contaminé si au moins un de ses compartiments de collecte de déchets comprend au moins un contaminant défini comme tel par rapport aux déchets que le compartiment de collecte de déchets est destiné à contenir, i.e. si au moins un des compartiments de collecte de déchets est contaminé. Au sens de la présente invention, le score de tri indicatif d'un risque de contamination du conteneur de collecte de déchets est indicatif d'un risque de contamination par un contaminant quelconque tel qu'il peut être défini pour le conteneur de collecte de déchets prédéterminé et n'est pas limité à un contaminant déjà identifié dans un évènement antérieur de contamination du conteneur de collecte des déchets et qui est traité en tant qu'information de tri utilisée pour la détermination du score de tri. En effet, la présence d'un contaminant d'un type donné peut, selon les cas, être corrélée à un risque augmenté de contamination ultérieure par un autre type de contaminant, par exemple par ce qu'il traduirait une tendance générale d'un utilisateur particulier à ne pas respecter des consignes de tri.

Selon un mode de réalisation préféré, le conteneur de collecte des déchets est tel que défini dans la norme EN 840: 2020.

L'invention peut comporter l'une ou plusieurs des caractéristiques optionnelles suivantes, prises seules ou en combinaison.

Selon un mode de réalisation préféré, l'étape de traitement des informations de tri est réalisée en utilisant au moins un modèle entrainé par apprentissage automatique qui traite les informations de tri qui lui sont soumises pour déterminer le score de tri. Un modèle entrainé par apprentissage automatique est aussi couramment appelé une intelligence artificielle. Il est ainsi possible de prévoir qu'un grand nombre de données soit traité par ce modèle entrainé par apprentissage automatique afin que le score de tri soit le plus représentatif possible d'un risque de contamination du conteneur de collecte de déchets. En outre, un modèle entrainé par apprentissage automatique est apte à détecter de nouvelles corrélations entre des informations de tri et un risque accru de contamination d'un conteneur de collecte de déchets.

Selon un mode de réalisation avantageux, le procédé comprend en outre une étape de mesure du poids du conteneur de collecte de déchets, le poids mesuré du conteneur de collecte de déchets étant utilisé en tant qu'information de tri pour déterminer le score de tri. Le poids d'un conteneur de collecte de déchets peut être indicatif du risque de présence d'un contaminant dans le conteneur de collecte de déchets puisque le poids attendu d'un conteneur de collecte de déchets donné, lorsqu'il est rempli, varie suivant le type de déchets qu'il est destiné à contenir. En particulier, lorsque le conteneur est un conteneur de collecte de déchets valorisables, il est alors attendu que le poids du conteneur de collecte de déchets, une fois rempli, soit relativement faible par rapport à un conteneur destiné à contenir d'autres types de déchets, par exemple des déchets ménagers. Dans ce cas, un poids supérieur à un seuil prédéterminé peut donc être indicatif d'un risque accru de présence d'un contaminant dans le conteneur de collecte de déchets. De la même façon, le poids d'un conteneur de collecte de déchets destinés à contenir des ordures ménagère peut être largement augmenté s'il contient des contaminants du type gravier.

Selon un mode de réalisation, l'au moins un paramètre prédéterminé associé à une augmentation d'un risque de contamination du conteneur de collecte de déchets est choisi parmi un poids du conteneur de collecte de déchets, une position géographique du conteneur de collecte de déchets, un type de conteneur de collecte de déchets, un volume du conteneur de collecte de déchets, la date du jour de collecte du conteneur de collecte de déchets, la saison du jour de collecte du conteneur de collecte de déchets, une condition météorologique du jour de collecte du conteneur de collecte de déchets et/ou d'une période de temps prédéterminée précédent le jour de collecte du conteneur de collecte de déchets, un propriétaire du conteneur de collecte de déchets, un utilisateur du conteneur de collecte de déchets ou une combinaison quelconque d'au moins deux de ces critères prédéterminés. Selon les cas de figures, tous ces paramètres peuvent être corrélés à un risque augmenté ou diminué de contamination du conteneur de collecte des déchets. Selon d'autres modes de réalisation, d'autres paramètres prédéterminés peuvent être utilisés.

Selon un mode de réalisation, l'action corrective comprend l'émission d'une alerte à destination d'un opérateur de collecte de déchets l'informant d'un risque de contamination du conteneur de collecte de déchets. La nature de l'alerte peut varier selon les modes de réalisation. Par exemple, l'alerte peut être sonore, visuelle et/ou haptique. Lorsque l'alerte est visuelle, on peut par exemple prévoir l'affichage d'un message textuel sur un tableau de bord d'un véhicule de collecte de déchets conduit par l'opérateur de collecte des déchets informant l'opérateur du risque de contamination d'un conteneur de collecte de déchets en particulier.

Selon un mode de réalisation, l'action préventive comprend l'émission d'une commande de blocage de moyens de collecte du conteneur de collecte de déchets. En bloquant les moyens de collecte du conteneur de collecte de déchets on évite que le contenu d'un conteneur potentiellement contaminé ne soit collecté dans une benne d'un véhicule de collecte de déchets. Selon les modes de réalisation, on peut par exemple prévoir que les moyens de blocage sont des moyens de blocages mécaniques et/ou électroniques.

Selon un mode de réalisation, l'action préventive comprend l'inscription du conteneur de collecte de déchets dans une base de données regroupant des conteneurs de collecte de déchets présentant un score de tri supérieur au seuil prédéterminé. L'inscription dans une telle base de données permet de faciliter la gestion de tournées de collecte de déchets des véhicules de collecte des déchets, par exemple en prévoyant l'éviction de la tournée de collecte d'au moins une partie des conteneurs inscrits sur cette base de données et/ou en prévoyant des actions préventives spécifiques pour les conteneurs de collecte de déchets inscrits dans la base de données, telle qu'une vérification systématique ou plus fréquente par l'opérateur de collecte des déchets du contenu des conteneurs de collecte de déchets concernés.

Selon un mode de réalisation, l'action préventive comprend l'exclusion temporaire ou définitive du conteneur de collecte de déchets d'une liste de conteneur de collecte de déchets faisant partie d'une tournée de collecte de déchets d'un véhicule de collecte de déchets. De cette façon, on exclue les conteneurs de collecte de déchets qui sont le plus à risque d'être contaminés, notamment lorsque ces conteneurs de collecte de déchets ont été l'objet de contamination répétées malgré la mise en œuvre d'action préventive visant à empêcher ou limiter de nouveaux évènements de contamination.

Selon un mode de réalisation, l'action préventive comprend l'émission d'un message d'alerte à un utilisateur et/ou un propriétaire du conteneur de collecte de déchets. L'utilisateur ou le propriétaire du conteneur de collecte de déchets n'a parfois pas une bonne connaissance des consignes de tri des déchets. En l'informant, éventuellement en temps réel, que son conteneur de collecte des déchets a été mal trié et, éventuellement, en l'informant sur la nature de la contamination, on réduit le risque qu'une erreur de tri survienne à nouveau pour cet utilisateur.

Selon un mode de réalisation, l'action préventive comprend l'identification, par un opérateur de collecte de déchets, d'un type de contaminant présent dans le conteneur de collecte de déchets prédéterminé contaminé et l'association de ce type de contaminant au conteneur de collecte de déchets prédéterminé contaminé dans une base de données recensant des évènements antérieurs de contamination du conteneur de collecte de déchets prédéterminé. La base de données recensant les typologies de contamination d'un conteneur de collecte de déchets donné permet d'améliorer la détermination ultérieure du score de tri et éventuellement l'organisation de futures tournées de collecte de déchets.

Selon un mode de réalisation, le procédé comprend les étapes suivantes :
- préalablement à une tournée de collecte de déchets d'un véhicule de collecte de déchets, on génère une cartographie prédictive comprenant les conteneurs de collecte de déchets faisant partie de la tournée de collecte de déchets, le ou les conteneurs de collecte de déchets ayant un score de tri supérieur au seuil prédéterminé étant identifiés comme tel dans la cartographie prédictive ;
- postérieurement à la tournée de collecte de déchets du véhicule de collecte de déchets, on génère une cartographie effective comprenant les conteneurs de collecte de déchets de la tournée de collecte de déchets pour lesquels une contamination par au moins contaminant a effectivement été constatée ; et
- on détermine un circuit et des conditions d'une prochaine tournée de collecte de déchets sur la base d'une comparaison entre la cartographie prédictive et la cartographie effective.

D'une part, il est ainsi possible d'adapter et d'optimiser le circuit de la tournée de collecte de déchets, par exemple en excluant ou en demandant une vigilance accrue pour un certain nombre de conteneurs de collecte de déchets ayant un score de tri supérieur au seuil prédéterminé. D'autre part, il est également possible d'adapter et d'optimiser les moyens matériels et humains nécessaires à la réalisation de la tournée de collecte de déchets dans les meilleures conditions possibles. On peut par exemple prévoir des moyens humains plus importants pour effectuant une vérification manuelle de la contamination des conteneurs de collecte de déchets si on prévoit qu'un grand nombre de conteneur de collecte de déchets avec un score de tri supérieur au seuil prédéterminé sont présents dans la tournée de collecte de déchets. L'identification des conteneurs de collecte de déchets comme étant des conteneurs de déchets ayant un score tri supérieur au seuil prédéterminé dans la cartographie prédictive peut être mise en œuvre de diverses façons. On peut par exemple prévoir d'utiliser un code couleur, une signalisation lumineuse ou des indications textuelles.

De préférence, le procédé comprend en outre :
- le recueil de paramètres associés à des collectes de déchets antérieures,
- l'identification d'au moins un paramètre corrélé à la survenue d'un évènement de contamination du conteneur de collecte de déchets, et
- l'ajout du paramètre corrélé à la survenue d'un évènement de contamination du conteneur de collecte de déchets en tant que paramètre prédéterminé associé à une augmentation d'un risque de contamination du conteneur de collecte de déchets. Ces étapes peuvent par exemple être mises en œuvre par un modèle entrainé par apprentissage automatique, aussi appelé intelligence artificielle, qui traite les paramètres associés à des collectes de déchets antérieures qui ont été recueillies afin d'identifier au moins un paramètre corrélé à la survenue d'un évènement de contamination du conteneur de collecte de déchets. Il est ainsi possible de détecter de nouveaux paramètres permettant d'améliorer la fiabilité de la prédiction du risque de contamination du conteneur de collecte de déchets.

Avantageusement, le procédé comprend en outre une étape d'acquisition et d'analyse d'images d'un contenu du conteneur de collecte de déchets avant, au cours et/ou après une collecte des déchets contenus dans le conteneur de collecte de déchets, l'analyse des images étant destinée à détecter la présence d'au moins un contaminant prédéterminé dans le contenu du conteneur de collecte de déchets, dans lequel :
- si l'analyse des images détermine un risque supérieur à un seuil prédéterminé de présence du contaminant prédéterminé avant la collecte des déchets, on commande l'émission d'un signal d'alerte à un opérateur de collecte de déchets et/ou une mise en œuvre de moyens de blocage de la collecte de déchets pour empêcher une collecte de déchets du conteneur de collecte de déchets, et/ou
- si l'analyse des images détermine un risque supérieur à un seuil prédéterminé de présence du contaminant prédéterminé au cours de la collecte des déchets, on commande l'émission d'un signal d'alerte à un opérateur de collecte de déchets et/ou une mise en œuvre des moyens de blocage de la collecte de déchets pour interrompre la collecte de déchets provenant du conteneur de collecte de déchets, et/ou
- si l'analyse des images détermine un risque supérieur à un seuil prédéterminé de présence d'un contaminant prédéterminé après la collecte des déchets, on commande l'émission d'un signal d'alerte à un opérateur de collecte de déchets.

Selon un mode de réalisation, l'acquisition d'images d'un contenu du conteneur de collecte de déchets étant réalisée en utilisant des moyens d'acquisition d'images, le procédé comprenant en outre :
- une étape de détection d'une défaillance des moyens d'acquisition d'images, et
- si une défaillance des moyens d'acquisition d'images est détectée, on commande l'émission d'un signal d'alerte à un opérateur de collecte de déchets et/ou à une unité de contrôle distante.

Une défaillance des moyens d'acquisition d'images peut être une défaillance interne aux moyens d'acquisition d'images, par exemple en raison d'un problème électronique ou logiciel, ou une défaillance d'origine extérieur, par exemple en cas d'obstruction, notamment par des déchets, d'un objectif des moyens d'acquisition d'images. En signalant la défaillance des moyens d'acquisition d'image, on permet la mise œuvre d'action corrective afin d'assurer que les étapes d'acquisition et d'analyse d'image soient mises en œuvre de la façon la plus optimale possible. On réduit notamment le risque que les moyens d'acquisition d'images génèrent un nombre important de faux négatif en ne détectant pas un contaminant présent dans le contenu du conteneur de collecte de déchets.

Selon un mode de réalisation, le procédé comprend les étapes suivantes :
- on détermine un taux de contaminants prédéterminés accumulés dans une benne de collecte de déchets d'un véhicule de collecte de déchets au cours d'une tournée de collecte de déchets sur la base de l'analyse des images des contenus des conteneurs de collecte de déchets qui ont été collectés par le véhicule de collecte de déchets ; et
- si le taux de contaminants prédéterminés accumulés dans la benne de collecte de déchets dépasse un seuil de contamination prédéterminé, on commande l'arrêt de la tournée de collecte de déchets et/ou on commande l'émission d'un signal à destination d'un opérateur de collecte de déchet l'informant que la tournée de collecte de déchets doit s'arrêter.

Le suivi du taux de contamination au sein de la benne de collecte de déchets et l'arrêt de la tournée de collecte en cas de dépassement d'un seuil de contamination prédéterminé permettent avantageusement de limiter la quantité de contaminants qui vont être dirigés vers un centres de tri. On réduit ainsi la contamination de ce centre de tri.

L'invention se rapporte également à un véhicule de collecte des déchets, comprenant des moyens de communication avec une unité de contrôle destinée à commander les étapes du procédé de gestion prédictive d'une contamination d'un conteneur de collecte de déchet tel que décrit précédemment.

### Brève description des figures

L'invention sera mieux comprise à la lecture de la description qui va suivre donnée uniquement à titre d'exemple et faite en se référant aux dessins annexés dans lesquels :
La [Fig. 1] est une représentation schématique d'un véhicule de collecte de déchets selon l'invention ; et
La [Fig. 2] est un diagramme représentant les différentes étapes du procédé selon l'invention.

### Description détaillée

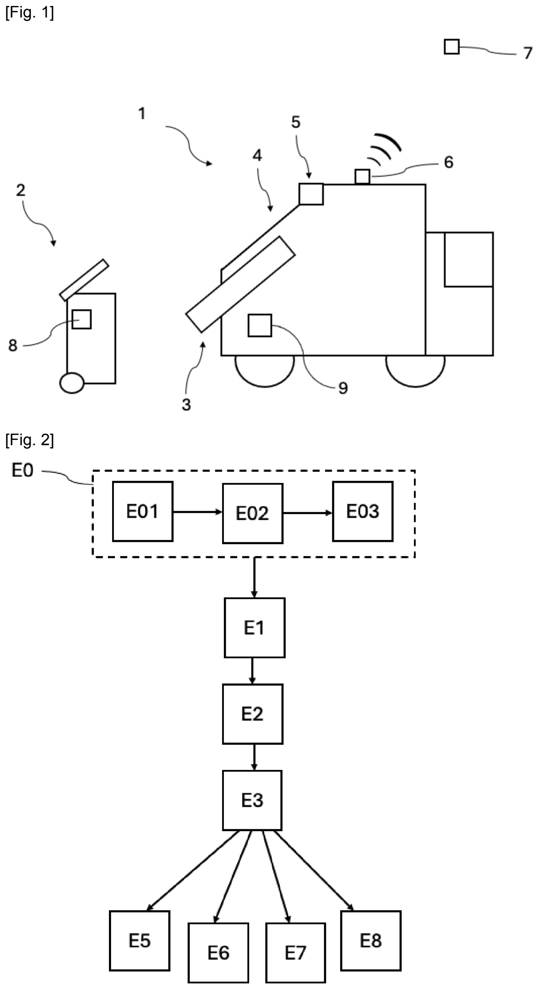

Sur la figure 1, on a représenté schématiquement un véhicule 1 de collecte de déchets selon l'invention.

Le véhicule 1 de collecte des déchets est destiné à collecter des déchets contenus dans un conteneur 2 de collecte de déchet. Pour cela, le véhicule 1 de collecte de déchets comprend des moyens 3 de levage d'un conteneur 2 de collecte de déchets destinés à lever un conteneur 2 de collecte de déchets et à le basculer de manière à collecter le contenu du conteneur 2 de collecte de déchets dans une benne 4 de collecte de déchets du véhicule 1 de collecte de déchets. Dans le cas présent, le véhicule 1 de collecte de déchets comprend en outre des moyens de pesée d'un conteneur 2 de collecte de déchets aptes à mesurer le poids d'un conteneur 2 de collecte de déchets avant la collecte de déchets. Selon le présent mode de réalisation, le véhicule 1 de collecte de déchets comprend en outre des moyens 5 d'acquisition et d'analyse d'images d'un contenu du conteneur de collecte de déchets avant, au cours et/ou après une collecte des déchets. Ces moyens 5 d'acquisition et d'analyse d'images comprennent par exemple une caméra et un modèle entrainé par apprentissage automatique à analyser des images capturées par la caméra afin de détecter la présence de contaminants dans le contenu du conteneur 2 de collecte de déchets.

Le véhicule 1 de collecte de déchets comprend en outre des moyens 6 de communication avec une unité 7 de contrôle qui est destinée à commander les étapes d'un procédé de gestion prédictive d'une contamination d'un conteneur de collecte de déchets selon l'invention. Ces moyens 6 de communication sont connus en eux-mêmes et comprennent tout moyen permettant classiquement la communication à distance entre un véhicule 1 et une unité 7 de contrôle située à distance du véhicule 1. Il s'agit par exemple de moyens de radiocommunication ou de communication basée sur le réseau téléphonique mobile.

Selon le présent mode de réalisation, le conteneur 2 de collecte de déchets est un conteneur 2 de collecte de déchets valorisables. Il est par exemple du type de ceux décrits dans la norme NF EN 840:2020. Selon d'autres modes de réalisation, on peut prévoir que le conteneur soit d'un autre type et/ou soit destiné à collecter d'autres types de déchets, telles que, par exemple, des déchets ménagers.

On décrit ci-après un mode de réalisation du procédé de gestion prédictive d'une contamination du conteneur 2 de collecte de déchets mis en œuvre par ordinateur.

Le procédé selon l'invention peut typiquement être mis en œuvre en amont ou au cours d'une tournée de collecte des déchets par le véhicule 1 de collecte de déchets. On peut également prévoir que le procédé selon l'invention soit mis en œuvre en dehors d'une tournée de collecte de déchets, par exemple afin de repérer des propriétaires associés à un conteneur 2 de collecte de déchets donné pour lequel il a été déterminé que des mesures correctives et/ou préventives devraient être prises.

Selon le présent mode de réalisation, le procédé de gestion prédictive d'une contamination d'un conteneur 2 de collecte de déchets comprend les étapes décrites ci-après.

Dans une première étape E1, on traite des informations de tri liées, d'une part, à un ou plusieurs évènements antérieurs de contamination par au moins un contaminant prédéterminé d'un conteneur 2 de collecte de déchets prédéterminé, et, d'autre part, à au moins un paramètre prédéterminé associé à une augmentation d'un risque de contamination du conteneur 2 de collecte de déchets prédéterminé.

Les informations de tri liées à un ou plusieurs évènements antérieurs de contamination sont typiquement des informations stockées dans une base de données recensant des évènements de contaminations qui ont été détectées lors de précédentes tournées de collectes du conteneur 2 de collecte de déchets. On peut prévoir que la base de données comprend en outre des informations supplémentaires associées à des conditions de collecte d'un conteneur 2 de collecte de déchets prédéterminé pour chaque collecte préalable. L'identification d'un conteneur 2 de collecte de déchets donné peut, par exemple, être obtenue en utilisant des moyens d'identification d'un conteneur de collecte donné, tels que des moyens de radio-identification (souvent désignés par l'acronyme RFID, de l'anglais « *radio frequency identification* »). Ainsi, on peut prévoir que le conteneur de collecte de déchets comprend une radio-étiquette 8 comprenant une antenne associée à une puce électronique qui reçoit et répond aux requêtes radio émises par un émetteur-récepteur 9 qui peut, par exemple, être porté par un véhicule 1 de collecte de déchets.

L'utilisation des évènements antérieurs de contamination du conteneur 2 de collecte de déchets prédéterminé et d'au moins un autre paramètre prédéterminé associé à une augmentation d'un risque de contamination du conteneur 2 de collecte de déchets prédéterminé permet d'affiner la détermination du risque de contamination du conteneur 2 de collecte de déchets et donc de réduire le nombre de faux positifs, i.e. le nombre de cas dans lesquels on estime qu'il existe un risque important que le conteneur 2 de collecte de déchets soit contaminé alors que ce n'est pas le cas.

Dans le cas présent, le conteneur étant un conteneur 2 de collecte de déchets valorisables, un contaminant prédéterminé correspondant à tout déchet qui ne serait pas un déchets valorisables, par exemple des graviers, des déchets ménagers, des déchets dangereux telle qu'une bouteille ou une cartouche de gaz ou encore un produit en verre. Selon un autre mode de réalisation, lorsque le conteneur est un conteneur 2 de collecte de déchets ménagers, un contaminant prédéterminé correspond à tout déchet qui ne serait pas un déchet ménager, par exemple des graviers, un produit en verre, ou des déchets dangereux telles qu'une bouteille ou une cartouche de gaz.

Dans une deuxième étape E2, on détermine, sur la base du traitement des informations de tri obtenues à la première étape E1, un score de tri indicatif d'un risque de contamination du conteneur 2 de collecte de déchets. Autrement dit, le score de tri reflète le risque qu'un conteneur 2 de collecte de déchets donné soit contaminé sur la base des informations de tri qui ont été collectées et traitées. Par exemple, on peut prévoir que toute information de tri associée à un risque accru de contamination du conteneur 2 de collecte de déchet fait augmenter le score de tri et que toute information de tri associée à une diminution du risque de contamination du conteneur 2 de collecte des déchets fait diminuer le score de tri. Typiquement, un ou plusieurs évènement antérieurs de contamination du conteneur 2 de collecte de déchets sont de natures à faire augmenter le risque de contaminations futures du conteneur 2 de collecte de déchets.

Si le score de tri est supérieur à un seuil prédéterminé, une troisième étape E3 prévoit la commande de la mise en œuvre d'une action corrective et/ou préventive destinée à empêcher et/ou prévenir la collecte du conteneur 2 de collecte de déchet prédéterminé contaminé par l'au moins un contaminant prédéterminé.

Avantageusement, on peut prévoir que la première étape E1 de traitement des informations de tri est réalisée en utilisant au moins un modèle entrainé par apprentissage automatique qui traite les informations de tri qui lui sont soumises pour déterminer le score de tri. Un modèle entrainé par apprentissage automatique est aussi couramment appelé une intelligence artificielle. **Il** est ainsi possible de prévoir qu'un grand nombre de données soient traitées par ce modèle entrainé par apprentissage automatique afin que le score de tri soit le plus représentatif possible d'un risque de contamination du conteneur 2 de collecte de déchets.

On peut prévoir une étape E0, par exemple antérieure à la première étape E1, dans laquelle :
- on recueille des paramètres associés à des collectes de déchets antérieures,
- on identifie au moins un paramètre corrélé à la survenue d'un évènement de contamination du conteneur 2 de collecte de déchets, et
- on ajoute le paramètre corrélé à la survenue d'un évènement de contamination du conteneur 2 de collecte de déchets en tant que paramètre prédéterminé associé à une augmentation d'un risque de contamination du conteneur 2 de collecte de déchets.

On peut par exemple prévoir que le modèle entrainé par apprentissage automatique est apte à détecter de nouvelles corrélations entre des informations de tri issus de collectes de déchets antérieures et un risque accru de contamination d'un conteneur 2 de collecte de déchets donné. Par exemple, si le modèle détecte une corrélation significative entre la survenue d'une contamination d'un conteneur 2 de collecte de déchets donné et des conditions météorologiques particulières, par exemple une température basse et/ou de la pluie, il est possible d'ajouter ce ou ces paramètres en tant que paramètres prédéterminés associés à une augmentation d'un risque de contamination du conteneur 2 de collecte de déchets. Le modèle entrainé par apprentissage automatique permet ainsi de traiter facilement un grand nombre de données et d'identifier, parmi ce grand nombre de données, des paramètres susceptibles d'améliorer la fiabilité du procédé de gestion prédictive selon l'invention. Par ailleurs, on remarque également qu'il est ainsi possible de prévoir qu'un ou plusieurs paramètres de tri permettant de déterminer le score de tri soient spécifiques à un conteneur 2 de collecte de déchets en particulier, améliorant ainsi la spécificité de la détermination du risque de contamination et donc l'efficacité du procédé.

Selon le mode de réalisation présenté ici, les étapes E0 à E3 sont réalisées en amont d'une tournée de collecte des déchets par un véhicule 1 de collecte de déchets. Ainsi, en fonction du score de tri qui a été déterminé à la deuxième étape E2, on peut prévoir que la troisième étape E3 de mise en œuvre d'une mesure préventive correspond à l'inscription E7 d'un conteneur 2 de collecte de déchets dont le score de tri dépasse le seuil prédéterminé dans une base de données regroupant des conteneurs 2 de collecte de déchets présentant un score de tri supérieur au seuil prédéterminé. Diverses actions peuvent ainsi facilement être prévues sur la base de l'inscription dans cette base de données. En particulier, on peut prévoir que les conteneurs 2 de collecte de déchets inscrits dans cette base de données sont exclus temporairement ou définitivement d'une ou plusieurs tournées de collecte de déchets. On peut également prévoir l'émission d'un signal d'alerte à destination d'un opérateur de collecte de déchets effectuant une tournée de collecte de déchets, l'informant d'un risque de contamination d'un conteneur 2 de collecte de déchets en particulier. L'opérateur peut ainsi prendre des mesures en conséquence, par exemple une vérification manuelle du contenu du conteneur 2 de collecte de déchets. On comprend qu'il est ainsi possible de réduire la fréquence et améliorer l'efficacité des vérifications effectuées par les opérateurs de collecte de déchets. Ainsi, la vérification du contenu des conteneurs 2 de collecte de déchets ne se fait plus au hasard mais principalement sur des conteneurs 2 pour lequel il a été déterminé de manière fiable et spécifique un risque important de contamination.

Par ailleurs, additionnellement ou alternativement, on peut prévoir, lorsque le score de tri est supérieur au seuil prédéterminé, que l'action préventive mise en œuvre comprend l'émission d'une commande de blocage de moyens de collecte du conteneur de collecte de déchets. Il n'est donc pas possible pour l'opérateur de commander la collecte du contenu du conteneur 2 de collecte de déchets dans la benne 4 du véhicule 1 de collecte de déchets. Ainsi, même si l'opérateur n'a pas remarqué l'alerte l'informant qu'une vérification manuelle doit être effectuée pour ce conteneur 2 de collecte de déchets, ou s'il n'est pas prévu qu'une telle alerte soit émise, la collecte du contenu du conteneur 2 de collecte de déchets est empêchée tant qu'une vérification de ce contenu n'a pas été effectuée par l'opérateur de collecte de déchets.

Par ailleurs, lors de la collecte, on peut prévoir que le véhicule 1 de collecte des mesure le poids des conteneurs 2 de collecte de déchets qu'il collecte. Le poids mesuré du conteneur 2 de collecte de déchets est alors utilisé en tant qu'information de tri pour déterminer le score de tri. Typiquement, dans le cas d'un conteneur de collecte des déchets valorisable selon le présent mode de réalisation, il est attendu que le conteneur 2 de collecte de déchets ait un poids relativement faible, inférieur à un seuil prédéterminé. Si le poids du conteneur 2 de collecte de déchets au moment de la collecte de son contenu est supérieur au seuil prédéterminé, il s'agit d'un indice d'un risque accru de la présence d'un contaminant dans le conteneur 2 de collecte de déchets, par exemple de la présence de déchets ménagers, de graviers ou de produits en verre. L'information de tri concernant le poids du conteneur 2 de collecte de déchets peux ainsi être utilisée lors de la deuxième étape E2 de détermination du score de tri. Ainsi, lors de la collecte de déchets il est possible que l'information de tri relative au poids du conteneur 2 de collecte de déchets modifie le score de tri de façon à lui faire dépasser le seuil prédéterminé. Dès lors, conformément à la troisième étape E3 du procédé, on commande la mise en œuvre d'une action corrective et/ou préventive destinée à empêcher et/ou prévenir la collecte du conteneur 2 de collecte de déchet prédéterminé contaminé. Il est par exemple possible de prévoir l'émission E6 d'une commande de blocage de moyens de collecte du conteneur de collecte de déchets, tel qu'un blocage des moyens 3 de levage et/ou l'émission E5 d'une alerte à destination d'un opérateur de collecte de déchets l'informant d'un risque de contamination du conteneur 2 de collecte des déchets.

Si le score de tri est supérieur au seuil prédéterminé, on peut prévoir l'émission E8 d'un message d'alerte à un utilisateur et/ou un propriétaire du conteneur 2 de collecte de déchets. Le conteneur 2 de collecte de déchets peut facilement être associé à son utilisateur et/ou son propriétaire ainsi qu'à ses coordonnées dans une base de données. L'émission de ce signal d'alerte permet notamment d'attirer l'attention de l'utilisateur et/ou du prioritaire sur le risque important d'erreur de tri issu des évènements antérieurs de contamination concernant directement ou indirectement son conteneur de collecte de déchets. Cette action de prévention permet de réduire le risque qu'une nouvelle erreur de tri se produise et donc améliore la qualité du tri. Le message d'alerte est par exemple un message d'alerte envoyé sur son téléphone, par exemple un message du type SMS ou une notification dite « push », ou un courriel.

Selon le présent mode de réalisation, l'au moins un paramètre prédéterminé associé à une augmentation d'un risque de contamination du conteneur 2 de collecte de déchets est choisi parmi un poids du conteneur 2 de collecte de déchets, une position géographique du conteneur 2 de collecte de déchets, un type de conteneur 2 de collecte de déchets, un volume du conteneur 2 de collecte de déchets, la date du jour de collecte du conteneur 2 de collecte de déchets, la saison du jour de collecte du conteneur 2 de collecte de déchets, une condition météorologique du jour de collecte du conteneur 2 de collecte de déchets et/ou d'une période de temps prédéterminée précédent le jour de collecte du conteneur 2 de collecte de déchets, un propriétaire du conteneur 2 de collecte de déchets, un utilisateur du conteneur 2 de collecte de déchets ou une combinaison quelconque d'au moins deux de ces paramètres prédéterminés. Bien entendu, d'autres paramètres modulant le risque de contamination d'un conteneur 2 de collecte de déchets donné peuvent être utilisés. Comme indiqué précédemment, ces autres paramètres peuvent par exemple être identifiés par le modèle entrainé par apprentissage automatique.

Au cours de la tournée de collecte des déchets, on peut prévoir en outre une étape d'acquisition et d'analyse d'images d'un contenu de conteneurs 2 de collecte de déchets avant, au cours et/ou après une collecte des déchets contenus dans les conteneurs 2 de collecte de déchets. L'analyse des images est destinée à détecter la présence d'au moins un contaminant prédéterminé dans le contenu d'un conteneur 2 de collecte de déchets donné.

Si l'analyse des images détermine un risque supérieur à un seuil prédéterminé de présence d'un contaminant avant la collecte des déchets, on commande l'émission d'un signal d'alerte à un opérateur de collecte de déchets et/ou une mise en œuvre des moyens de blocage de la collecte de déchets pour empêcher une collecte de déchets du conteneur 2 de collecte de déchets. On empêche ainsi la collecte d'un conteneur 2 de collecte de déchets ayant un risque important d'être contaminé, limitant ainsi le risque que la benne 4 de collecte de déchets du véhicule 1 de collecte de déchets soit elle aussi contaminée. L'analyse des images est par exemple réalisée par un modèle entrainé par apprentissage automatique à détecter un ou plusieurs types de contaminants au sein d'un conteneur 2 de collecte de déchets. Selon le présent mode de réalisation, s'agissant d'un conteneur 2 de collecte de déchets valorisable, on peut prévoir que l'analyse des images est destinée à détecter la présence de déchets ménagers, typiquement d'un sac noir de collecte de déchets ménagers, de produits en verre et/ou de produits dangereux, telle qu'une bouteille ou une cartouche de gaz.

Additionnellement ou alternativement, si l'analyse des images détermine un risque supérieur à un seuil prédéterminé de présence d'un contaminant au cours de la collecte des déchets, on commande l'émission d'un signal d'alerte à un opérateur de collecte de déchets et/ou une mise en œuvre des moyens de blocage pour interrompre la collecte de déchets provenant du conteneur 2 de collecte de déchets. **Il** est possible que l'analyse des images du contenu du conteneur 2 de collecte des déchets avant que son contenu ne soit collecté ne permette pas d'identifier de potentiels contaminants, notamment si ces derniers ne sont pas localisés à la surface du contenu du conteneur 2 de collecte des déchets. Ainsi, l'analyse des images du contenu du conteneur 2 de collecte de déchets au cours de la collecte de déchets, c'est-à-dire au cours du déversement du contenu du conteneur 2 de collecte de déchets dans la benne 4 du véhicule 1 de collecte des déchets permet d'améliorer l'efficacité du procédé selon l'invention en étant apte à identifier de potentiels contaminants qui n'auraient pas pu être identifiés si seules les images du contenu du conteneur 2 de collecte des déchets avant la collecte des déchets avaient été analysées. On comprend que l'éventuel contaminant peut être identifié, d'une part, alors qu'il est encore dans le conteneur 2 de collecte de déchets, avant d'être déversé dans la benne 4 de collecte de déchets du véhicule 1 de collecte de déchets, et, d'autre part, alors qu'il est en train d'être déversé depuis le conteneur 2 de collecte de déchets vers la benne 4 de collecte de déchets du véhicule 1 de collecte de déchets. La mise en œuvre des moyens de blocage afin d'interrompre la collecte de déchets du conteneur 2 de déchets permet, d'une part, de ne pas recouvrir par d'autres déchets un éventuel contaminant qui a été identifié au cours de son déversement dans la benne 4 de collecte de déchets du véhicule 1 de collecte de déchets. La récupération de ce contaminant dans la benne 4 du véhicule 1 de collecte de déchets est ainsi facilitée. La mise en œuvre des moyens de blocage afin d'interrompre la collecte de déchet du conteneur 2 de collecte de déchets permet, d'autre part, de prévenir la collecte d'éventuels autres contaminants qui seraient présents dans le conteneur 2 de collecte des déchets et n'auraient pas encore été déversés dans la benne 4 du véhicule 1 de collecte des déchets. En effet, une fois qu'un premier contaminant a été identifié dans le conteneur 2 de collecte de déchets, la probabilité que le conteneur 2 de collecte de déchets comprenne un autre contaminant est généralement augmentée et il peut donc être souhaitable d'interrompre la collecte pour que l'opérateur de collecte des déchets vérifie le contenu du conteneur 2 de collecte des déchets.

Alternativement ou additionnellement, si l'analyse des images détermine un risque supérieur à un seuil prédéterminé de présence d'un contaminant après la collecte des déchets, on commande l'émission d'un signal d'alerte à un opérateur de collecte de déchets. L'opérateur est ainsi alerté de la présence d'un contaminant dans la benne 4 de collecte de déchets du véhicule 1 de collecte de déchets et peut prendre des actions correctives ou conservatoires afin de ne pas impacter tout une chaine de valorisation des déchets ou afin de réduire un risque d'accident, notamment lorsque le contaminant est dangereux, par exemple lorsque le contaminant est une bouteille ou une cartouche de gaz qui présente un risque élevé d'explosion, que ce soit dans la benne 4 du véhicule 1 de collecte des déchets, dans le conteneur 2 de collecte de déchets ou sur un site de tri des déchets valorisables.

L'invention n'est pas limitée aux modes de réalisation présentés et d'autres modes de réalisation apparaîtront clairement à l'homme du métier. En particulier, selon les modes de réalisation, on peut prévoir que le conteneur de collecte des déchets soit destiné à contenir des déchets autres que des déchets valorisables. Par exemple, on peut prévoir que le conteneur 2 de collecte des déchets est un conteneur 2 de collecte de déchets ménagers. Dans ce cas, les contaminants sont par exemple des produits en verre ou des produits dangereux telles qu'une bouteille ou une cartouche de gaz qui sont susceptibles d'exploser dans le conteneur 2 de collecte de déchets, dans la benne 4 du véhicule 1 de collecte de déchets ou dans un centre de tri de déchets, avec dans chaque situation un risque de blesser un usager ou un opérateur de collecte ou de tri des déchets. Selon un autre mode de réalisation, on peut prévoir que le conteneur 2 de collecte de déchets comprend plusieurs compartiments de collecte de déchets destinés chacun à collecter un type de déchets donné. Dans ce cas, le véhicule 1 de collecte de déchets comprend généralement plusieurs bennes 4 ou plusieurs compartiments dans une même benne 4 destinés à collecter les différents types de déchets issus des différents compartiments du conteneur 2 de collecte de déchets lors de la collecte du conteneur 2 de collecte de déchets. Selon ce mode de réalisation, on comprend que le score de tri indicatif d'un risque de contamination du conteneur 2 de collecte de déchets et donc indicatif d'un risque de contamination d'au moins un des compartiments de collecte de déchets du conteneur 2 de collecte de déchets.

### Liste de références

1 : véhicule de collecte de déchets
2 : conteneur de collecte de déchets
3 : moyens de levage d'un conteneur de collecte de déchets
4 : benne de collecte de déchets
5 : moyens d'acquisition et d'analyse d'images d'un contenu du conteneur de collecte de déchets
6 : moyens de communication avec une unité de contrôle
7 : unité de contrôle
8 : radio-étiquette
9 : émetteur-récepteur
E0: étapes préalables à l'étape E1 de traitement des informations de tri
E01 : recueil de paramètres associés à des collectes de déchets antérieures
E02 : identification d'au moins un paramètre corrélé à la survenue d'un évènement de contamination
E03 : ajout du paramètre corrélé à la survenue d'un évènement de contamination du conteneur de collecte de déchets en tant que paramètre prédéterminé associé à une augmentation d'un risque de contamination du conteneur de collecte de déchets
E1 : étape de traitement des informations de tri
E2 : étape de détermination du score de tri
E3 : étape de commande de la mise en œuvre d'une action corrective et/ou préventive
E5 : émission d'une alerte à destination d'un opérateur de collecte de déchets
E6 : émission d'une commande de blocage de moyens de collecte du conteneur de collecte de déchets
E7 : inscription du conteneur de collecte de déchets dans une base de données regroupant des conteneurs de collecte de déchets présentant un score de tri supérieur au seuil prédéterminé
E8 : émission d'un message d'alerte à un utilisateur et/ou un propriétaire du conteneur de collecte de déchets

## Revendications

1. Procédé de gestion prédictive d'une contamination d'un conteneur (2) de collecte de déchets mis en œuvre par ordinateur, dans lequel :
- on traite (E1) des informations de tri liées, d'une part, à un ou plusieurs évènements antérieurs de contamination par au moins un contaminant prédéterminé d'un conteneur (2) de collecte de déchets prédéterminé, et, d'autre part, à au moins un paramètre prédéterminé associé à une augmentation d'un risque de contamination du conteneur (2) de collecte de déchets prédéterminé,
- on détermine (E2), sur la base du traitement des informations de tri, un score de tri indicatif d'un risque de contamination du conteneur (2) de collecte de déchets, et
- si le score de tri est supérieur à un seuil prédéterminé, on commande (E3) la mise en œuvre d'une action corrective et/ou préventive destinée à empêcher et/ou prévenir la collecte du conteneur (2) de collecte de déchet prédéterminé contaminé.

2. Procédé selon la revendication 1, dans lequel l'étape de traitement (E1) des informations de tri est réalisée en utilisant au moins un modèle entrainé par apprentissage automatique qui traite les informations de tri qui lui sont soumises pour déterminer le score de tri.

3. Procédé selon l'une quelconque des revendications précédentes, dans lequel l'au moins un paramètre prédéterminé associé à une augmentation d'un risque de contamination du conteneur (2) de collecte de déchets est choisi parmi un poids du conteneur (2) de collecte de déchets, une position géographique du conteneur (2) de collecte de déchets, un type de conteneur (2) de collecte de déchets, un volume du conteneur (2) de collecte de déchets, la date du jour de collecte du conteneur (2) de collecte de déchets, la saison du jour de collecte du conteneur (2) de collecte de déchets, une condition météorologique du jour de collecte du conteneur (2) de collecte de déchets et/ou d'une période de temps prédéterminée précédent le jour de collecte du conteneur (2) de collecte de déchets, un propriétaire du conteneur (2) de collecte de déchets, un utilisateur du conteneur (2) de collecte de déchets ou une combinaison quelconque d'au moins deux de ces paramètres prédéterminés.

4. Procédé selon l'une quelconque des revendications précédentes, dans lequel l'action corrective comprend l'émission (E5) d'une alerte à destination d'un opérateur de collecte de déchets l'informant d'un risque de contamination du conteneur (2) de collecte de déchets.

5. Procédé selon l'une quelconque des revendications précédentes, dans lequel l'action préventive comprend l'émission (E6) d'une commande de blocage de moyens de collecte du conteneur (2) de collecte de déchets.

6. Procédé selon l'une quelconque des revendications précédentes, dans lequel l'action préventive comprend l'inscription (E7) du conteneur (2) de collecte de déchets dans une base de données regroupant des conteneurs (2) de collecte de déchets présentant un score de tri supérieur au seuil prédéterminé.

7. Procédé selon l'une quelconque des revendications précédentes, dans lequel l'action préventive comprend l'exclusion temporaire ou définitive du conteneur de collecte de déchets d'une liste de conteneur (2) de collecte de déchets faisant partie d'une tournée de collecte de déchets d'un véhicule (1) de collecte de déchets.

8. Procédé selon l'une quelconque des revendications précédentes, dans lequel l'action préventive comprend l'émission (E8) d'un message d'alerte à un utilisateur et/ou un propriétaire du conteneur (2) de collecte de déchets.

9. Procédé selon l'une quelconque des revendications précédentes, dans lequel l'action préventive comprend l'identification, par un opérateur de collecte de déchets, d'un type de contaminant présent dans le conteneur (2) de collecte de déchets prédéterminé contaminé et l'association de ce type de contaminant au conteneur (2) de collecte de déchets prédéterminé contaminé dans une base de données recensant des évènements antérieurs de contamination du conteneur (2) de collecte de déchets prédéterminé.

10. Procédé selon l'une quelconque des revendications précédentes, dans lequel :
- préalablement à une tournée de collecte de déchets d'un véhicule (1) de collecte de déchets, on génère une cartographie prédictive comprenant les conteneurs (2) de collecte de déchets faisant partie de la tournée de collecte de déchets, le ou les conteneurs (2) de collecte de déchets ayant un score de tri supérieur au seuil prédéterminé étant identifiés comme tel dans la cartographie prédictive ;
- postérieurement à la tournée de collecte de déchets du véhicule (1) de collecte de déchets, on génère une cartographie effective comprenant les conteneurs (2) de collecte de déchets de la tournée de collecte de déchets pour lesquels une contamination par au moins contaminant a effectivement été constatée ; et
- on détermine un circuit et des conditions d'une prochaine tournée de collecte de déchets sur la base d'une comparaison entre la cartographie prédictive et la cartographie effective.

11. Procédé selon l'une quelconque des revendications précédentes, comprenant en outre les étapes (E0) suivantes :
- le recueil (E01) de paramètres associés à des collectes de déchets antérieures,
- l'identification (E02) d'au moins un paramètre corrélé à la survenue d'un évènement de contamination du conteneur (2) de collecte de déchets, et
- l'ajout (E03) du paramètre corrélé à la survenue d'un évènement de contamination du conteneur (2) de collecte de déchets en tant que paramètre prédéterminé associé à une augmentation d'un risque de contamination du conteneur (2) de collecte de déchets.

12. Procédé selon l'une quelconque des revendications précédentes, comprenant en outre une étape d'acquisition et d'analyse d'images d'un contenu du conteneur (2) de collecte de déchets avant, au cours et/ou après une collecte des déchets contenus dans le conteneur (2) de collecte de déchets, l'analyse des images étant destinée à détecter la présence d'au moins un contaminant prédéterminé dans le contenu du conteneur (2) de collecte de déchets, dans lequel :
- si l'analyse des images détermine un risque supérieur à un seuil prédéterminé de présence du contaminant prédéterminé avant la collecte des déchets, on commande (E5, E6) l'émission d'un signal d'alerte à un opérateur de collecte de déchets et/ou une mise en œuvre de moyens de blocage de la collecte de déchets pour empêcher une collecte de déchets du conteneur de collecte de déchets, et/ou
- si l'analyse des images détermine un risque supérieur à un seuil prédéterminé de présence du contaminant prédéterminé au cours de la collecte des déchets, on commande (E5, E6) l'émission d'un signal d'alerte à un opérateur de collecte de déchets et/ou une mise en œuvre des moyens de blocage de la collecte de déchets pour interrompre la collecte de déchets provenant du conteneur (2) de collecte de déchets, et/ou
- si l'analyse des images détermine un risque supérieur à un seuil prédéterminé de présence d'un contaminant prédéterminé après la collecte des déchets, on commande (E5) l'émission d'un signal d'alerte à un opérateur de collecte de déchets.

13. Procédé selon la revendication 12, dans lequel, l'acquisition d'images d'un contenu du conteneur (2) de collecte de déchets étant réalisée en utilisant des moyens d'acquisition d'images, le procédé comprenant en outre :
- une étape de détection d'une défaillance des moyens d'acquisition d'images, et
- si une défaillance des moyens d'acquisition d'images est détectée, on commande l'émission d'un signal d'alerte à un opérateur de collecte de déchets et/ou à une unité de contrôle distante.

14. Procédé selon la revendication 12 ou 13, dans lequel :
- on détermine un taux de contaminants prédéterminés accumulés dans une benne (4) de collecte de déchets d'un véhicule (1) de collecte de déchets au cours d'une tournée de collecte de déchets sur la base de l'analyse des images des contenus des conteneurs (2) de collecte de déchets qui ont été collectés par le véhicule (1) de collecte de déchets ; et
- si le taux de contaminants prédéterminés accumulés dans la benne (4) de collecte de déchets dépasse un seuil de contamination prédéterminé, on commande l'arrêt de la tournée de collecte de déchets et/ou on commande l'émission d'un signal à destination d'un opérateur de collecte de déchet l'informant que la tournée de collecte de déchets doit s'arrêter.

15. Véhicule (1) de collecte des déchets, **caractérisé en ce qu'**il comprend des moyens (6) de communication avec une unité (7) de contrôle destinée à commander les étapes du procédé de gestion prédictive d'une contamination d'un conteneur (2) de collecte de déchets selon l'une quelconque des revendications précédentes.
